# EUROPÄISCHE PATENTSCHRIFT

(11) **EP 0 692 893 B1**
(45) Veröffentlichungstag und Bekanntmachung des Hinweises auf die Patenterteilung: **01.03.2000**
(21) Anmeldenummer: 95810433.3
(22) Anmeldetag: 28.06.1995
(51) Int. Cl.: H04L 12/56

(54) **Vorrichtung zur Vermittlung in digitalen Datennetzen für asynchronen Transfermodus**
Equipment for switching in digital ATM networks
Dispositif de commutation dans un réseau de commutation numérique à mode de transfer asynchrone

(30) Priorität: 12.07.1994 CH 222194
(43) Veröffentlichungstag der Anmeldung: 17.01.1996
(73) Patentinhaber: Ascom AG, 3000 Bern 14 (CH)
(72) Erfinder: Gillard, André, CH-1786 Sugiez (CH); Fehr, Rainer, CH-4114 Hofstetten (CH)
(74) Vertreter: AMMANN PATENTANWAELTE AG BERN

(56) Entgegenhaltungen:
- EP-A- 0 113 639
- EP-A- 0 292 962
- EP-A- 0 446 387
- EP-A- 0 569 173
- WO-A-90/04316

## Beschreibung

Die vorliegende Erfindung bezieht sich auf Vorrichtungen zur Vermittlung in digitalen Datennetzen gemäss Oberbegriff des Anspruchs 1. Derartige Vorrichtungen werden im folgenden als ATM-Switch bezeichnet, wobei ATM für "asynchroner Transfermodus" steht.

Für die zukünftigen Breitband-ISDN-Netze ist zur Erzielung hoher Uebertragungsraten und grosser Flexibilität der sogenannte asynchrone Transfermodus (ATM) vorgesehen. Wegen der asynchronen Betriebsweise müssen die Vermittler oder Switche in diesen Netzen in der Lage sein, relativ umfangreiche Datenmengen zwischenzulagern, bis es ihnen möglich ist, diese Daten zum nächsten Switch oder Empfänger weiterzuleiten. Darüberhinaus muss jeder Switch in der Lage sein, Adressfelder der paketweise eintreffenden Daten zu decodieren und diese in eine oder mehrere neue Zieladressen umzuformen entsprechend den Ausgangsleitungen, die ihm zur Verfügung stehen. Diese kombinierten Anforderungen von intelligenter Logik und hoher Speicherkapazität machte es bisher unmöglich, einen ATM-Switch für niedrige Anforderungen bezüglich Anzahl Ein- und Ausgängen mit vernünftigem Preis/Leistungsverhältnis zu konstruieren. Hierfür ist es u. a. nötig, nahezu sämtliche Funktionen als integrierte Schaltungen zu realisieren. Der relativ grosse Platzbedarf für die nötigen Speicherzellen sowie die komplizierte Struktur der nötigen Logik liess dies jedoch bisher unmöglich erscheinen, weswegen die bekannten Ausführungen aus diskreten Bauteilen und einfachen integrierten Standardschaltungen aufgebaut wurden.

Aus der EP-A-0 446 387 ist ein Switch bekannt, in dem unter der Kontrolle einer zentralen Steuerung Daten von Eingängen in einen Zentralspeicher übertragen werden und je nach Verfügbarkeit der Ausgänge über andere Datenleitungen aus dem Speicher zu den Ausgängen gelangen.

Die EP-A-0 569 173 beschreibt einen Switch, der auf einen zentralen Speicher verzichtet, jedoch entsprechende Speicherkapazitäten jedem einzelnen Ausgang vorsieht. Eine einkommende Datenzelle wird dabei von einem Eingang sofort an sämtliche Ausgänge weitergeleitet. Nach der Uebertragung der Datenzelle wird die Information vom Eingang ebenfalls an alle Ausgänge gegeben, für welche Ausgänge die Datenzelle bestimmt ist. Die nichtbetroffenen Ausgänge löschen dann diese Datenzelle aus ihrem Speicher. Auffällig ist an dieser Konstruktion die grosse Anzahl an Speichermodulen, d. h. eine aufwendige Konstruktion der Ausgänge, sowie die aufwendige Verbindungstechnik, da jeder Eingang mit jedem Ausgang verbunden werden muss.

Aus der EP-A-0 292 962 lehrt einen Switch, bei dem die einkommenden Datenzellen unmittelbar an die entsprechenden Ausgänge weitergeleitet werden. Auch hier liegt also eine Verbindungsführung von jedem Eingang zu jedem Ausgang vor. Ein zentraler Speicher ist nicht vorhanden.

Aus der EP-A-0 113 639 geht zum einen ein Verfahren hervor, wie auf einem Eingang mit einem ersten Header eingehende Datenzellen über einen Ausgang ausgegeben werden können, wobei gleichzeitig der erste Header durch einen zweiten Header ersetzt wird. Dies geschieht durch einen als Ringspeicher betriebenen Pufferspeicher. Eine Unterteilung des Pufferspeichers in Bereiche, die einzelnen Eingängen zugeordnet sind, ist nicht vorgesehen. Die Arbeitsweise zeichnet sich dadurch aus, dass in jedem Fall alle sechzehn Eingänge abgetastet werden, wenn auch nur an einem Eingang eine vollständige Datenzelle vorliegt. Nach Durchlaufen von nachfolgenden sechzehn Einlesezyklen in den Speicher werden die gespeicherten Datenzellen über die angeforderten Ausgänge wieder ausgegeben. Der hier vorhandene, zentrale Speicher hat also die Funktion eines Ringschieberegisters mit getrennten Ein- und Ausgängen, und die Daten werden in einem strengen Zeitraster ohne die Möglichkeit einer vorübergenenden Zwischenspeicherung durch den Switch hindurchbefördert.

Aus der EP-A-0 409 832 ist schliesslich ein Switch bekannt, in dem zwischen den Eingängen und den Ausgängen eine Anzahl Steuereinheiten angeordnet sind. Jede Steuereinheit ist dabei mit jedem Eingang und jedem Ausgang verbunden und weist für jeden Eingang und für jeden Ausgang eine Pufferstufe auf. Die Eingangspuffer und die Ausgangspuffer sind durch Adress- und Datenbus derart verbunden, dass in jeder Kontrolleinheit während des Umspeicherns von den Eingangspuffern auf die Ausgangspuffer auch die Zuordnungen zu den Ausgängen erfolgt. Die Kontrolleinheiten wirken also jeweils als 1-Bit-Schieberegister, die jedoch sechzehn Eingänge und siebzehn Ausgänge aufweisen und intern Informationen von einem Eingang auf einen oder mehrere beliebige Ausgänge umleiten können. Auch bei dieser Konstruktion fällt wieder eine aufwendige Verbindungstechnik auf, nicht nur zwischen den Eingängen bzw. Ausgängen und den Kontrolleinheiten, da von jedem Eingang bzw. jedem Ausgang jeweils ein bestimmtes Datenbit und im Falle der Eingänge noch zusätzlich eine Adressleitung zu jeder Kontrolleinheit zu führen ist, sondern auch intern in den Kontrolleinheiten eine komplizierte und aufwendige Verbindung zwsichen Eingangs- und Ausgangspuffern vorhanden ist. Auch hier sind wieder Eingänge und Ausgänge der zentralen Kontrolleinheiten getrennt ausgeführt.

Aufgabe der vorliegenden Erfindung ist es, einen ATM-Switch für geringe Anzahl Ein- und Ausgängen anzugeben, der eine an den Einsatz spezifisch angepasster integrierter Schaltungen besser angepasste Struktur aufweist.

Eine derartige Vorrichtung zur Vermittlung in digitalen Daten-, insbesondere Telefonienetzen im asynchronen Transfermodus (ATM-Switch) ist im Anspruch 1 angegeben. Die weiteren Ansprüche definieren bevorzugte Ausführungsformen.

Demgemäss wird vorgeschlagen, den nötigen Zwischenspeicher für die Zwischenlagerung der Datenzellen nicht jeweils separat für jeden einzelnen Ein- und Ausgang vorzusehen. Stattdessen wird ein zentraler Speicher verwendet, auf den sämtliche Ein- und Ausgänge über einen schnellen Bus Zugriff haben. Vorteilhaft hieran ist, dass für diesen Speicher gerade wegen der grösseren Kapazität Standardbausteine aus anderen Bereichen der Digitaltechnik verwendet werden können.

Die Konzentrierung des Zwischenspeichers erlaubt es, die dann noch verbleibende Logik für mehrere Ein- bzw. Ausgänge in einem Chipsatz, d. h. einem Satz integrierter Schaltungen, zusammenzufassen. In einer bevorzugten Ausführung der Erfindung ist es möglich, mehrere derartige Chipsätze nach Bedarf zu verwenden, um ATM-Switche mit unterschiedlichen Anzahlen von Ein- und Ausgängen zu erhalten. Die logische Verknüpfung und Synchronisierung dieser Chipsätze mit dem Speicher über einen gemeinsamen Bus kann mittels nur einer zusätzlichen Steuerleitung realisiert werden.

Die Erfindung soll weiter anhand eines bevorzugten Ausführungsbeispiels unter Bezugnahme auf Figuren erläutert werden.
- Figur 1: zeigt ein Blockschaltbild eines erfindungsgemässen Switches;
- Figur 2: zeigt das Blockschaltbild der Steuereinheit einer Ein-/Ausgabeeinheit; und
- Figur 3: schematisch den Aufbau des Speichers.

Gemäss der aktuellen ATM-Norm für Breitband-ISDN-Netze werden Daten mit einer Geschwindigkeit von 155 MBit/sec. in Form von Paketen zu je 53 Byte übertragen, wobei 1 Byte 8 Bit umfasst. Als 1 MBit bzw. 1 MByte werden im Rahmen der Beschreibung immer 10⁶ Bit bzw. 10⁶ Byte verstanden, soweit nichts anderes angegeben wird.

Ein sogenannter ATM-Switch dient zur wahlfreien Verbindung mehrerer Leitungen miteinander, wozu er über eine Anzahl Ein- und Ausgänge verfügt. Das Routing, d. h. die Festlegung, auf welchen Ausgang an einem Eingang ankommende Datenzellen mit einem bestimmten Adressteil geleitet werden sollen, ist entweder fest im Switch vorgegeben oder wird während des Betriebes entsprechend den momentanen Anforderungen verändert, wie es auch bei den konventionellen, analogen Telefonzentralen geschieht. Ein ATM-Switch erlaubt jedoch ein freizügiges Routing, u. a. die Verteilung einer Datenzelle auf mehrere Ausgänge ("Broadcasting") oder die Bündelung von Datenzellen mit unterschiedlichen Adressen, die auf verschiedenen Eingängen in den Switch gelangen, auf eine Ausgangsleitung.

Im eigentlichen Netz werden die Daten bitseriell übertragen, der ATM-Switch erhält oder sendet sie jedoch über einfache Seriell-Parallel-Wandler als Bytes, d. h. immer 8 Bit parallel. Die Daten werden in Paketen übertragen, gemäss ATM-Norm von 53 Bytes, wobei jedes Paket 48 Bytes Daten enthält. Die restlichen 5 Bytes dienen u. a. zur Festlegung der Zieladresse.

Zur Aufrechterhaltung der Uebertragungsgeschwindigkeit eines ATM-Netzes ist es nötig, dass die darin vorhandenen ATM-Switche die Daten möglichst unter allen Betriebsbedingungen mit der nominalen Geschwindigkeit von ca. 19,44 MByte/s bearbeiten können.

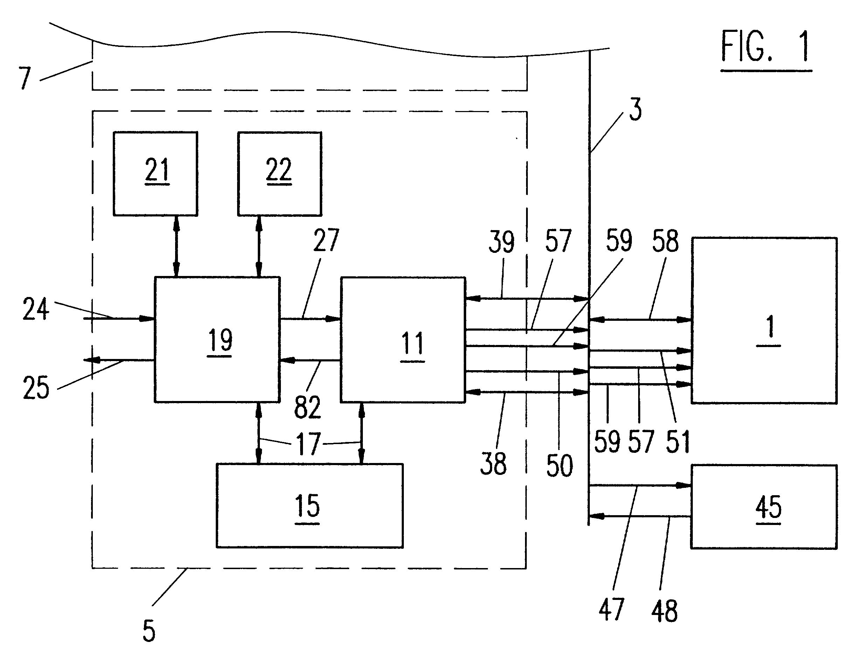

Fig. 1 zeigt den Aufbau des erfindungsgemässen ATM-Switches als Blockschaltbild. Er umfasst einen Speicher 1, der über einen Bus 3 mit einer Ein-/Ausgabeeinheit 5 verbunden ist. Optional können noch ein oder mehrere weitere, im wesentlichen gleich wie die Ein-/Ausgabeeinheit 5 aufgebaute weitere Ein-/Ausgabeeinheiten 7 am Bus angeschlossen sein. Der beispielhafte ATM-Switch ist für mindestens eine Ein-/Ausgabeeinheit mit vier Ein-/Ausgabekanälen und maximal 4 derartige Ein-/Ausgabeeinheiten ausgelegt. Damit ergibt sich eine Anschlusskapazität von 4 x 4 bis 16 x 16 in Viererschritten (4 x 4 = 4 Eingänge und 4 Ausgänge).

### Bus

Der Bus 3 muss in der Lage sein, bei der maximalen Ausbaustufe innerhalb der Zeit, die gemäss der ATM-Norm zur Uebertragung einer Datenzelle zur Verfügung steht, von jedem Eingang eine Datenzelle in den Speicher und auch eine Datenzelle aus dem Speicher zu jedem Ausgang zu übertragen. Diese Zeit beträgt ca. 2,73 µs, die sich aus der Uebertragungsrate von 155 MBit/s und der Grösse einer Datenzelle von 53 Bytes entsprechend 424 Bits ergibt.

Diese Anforderung an den Bus wird dadurch sicher erfüllt, dass jedem Ein- und Ausgang ein festes Zeitfenster von 85 ns zur Verfügung gestellt wird, wenn von einem maximalen Ausbau auf 16 Ein- und 16 Ausgänge ausgegangen wird. Damit ist sichergestellt, dass auch bei maximaler Auslastung des Switches der Durchsatz nicht absinkt. Durch die feste Zuordnung kann auch eine wesentliche Vereinfachung des Buszugriffs erfolgen. Ein synchroner Bus wird im allgemeinen von einem einzigen Zähler, dem Hauptzähler gesteuert. Der Stand dieses Zählers muss allen am Bus angeschlossenen Einheiten bekannt sein, woraus sich eine beträchtliche Anzahl zusätzlicher Leitungen am Bus ergibt. Im Hinblick auf eine weitestmögliche Realisierung der Funktionseinheiten des Switches als integrierte Schaltkreise muss jedoch die Anzahl von Leitungen möglichst klein gehalten werden, da die Anzahl der Anschlüsse an einem Gehäuse für integrierte Schaltungen begrenzt ist.

Gemäss vorliegender Erfindung wird dies bezüglich der Bussteuerung dadurch erreicht, dass jede Ein-/Ausgabeeinheit sowie, soweit nötig, auch die übrigen Einheiten jeweils über einen eigenen Buszähler verfügen. Diese Zähler werden über ein einziges Synchronisationssignal, das von einem Hauptzähler ausgeht, zu Beginn eines Buszyklus auf einen vordefinierten Anfangswert gesetzt. Ein Buszyklus umfasst dabei für jeden Ein- und Ausgang jeweils eine Zeitscheibe und dauert also gemäss oben gesagtem max. ca. 2,73 µs (Mikrosekunden).

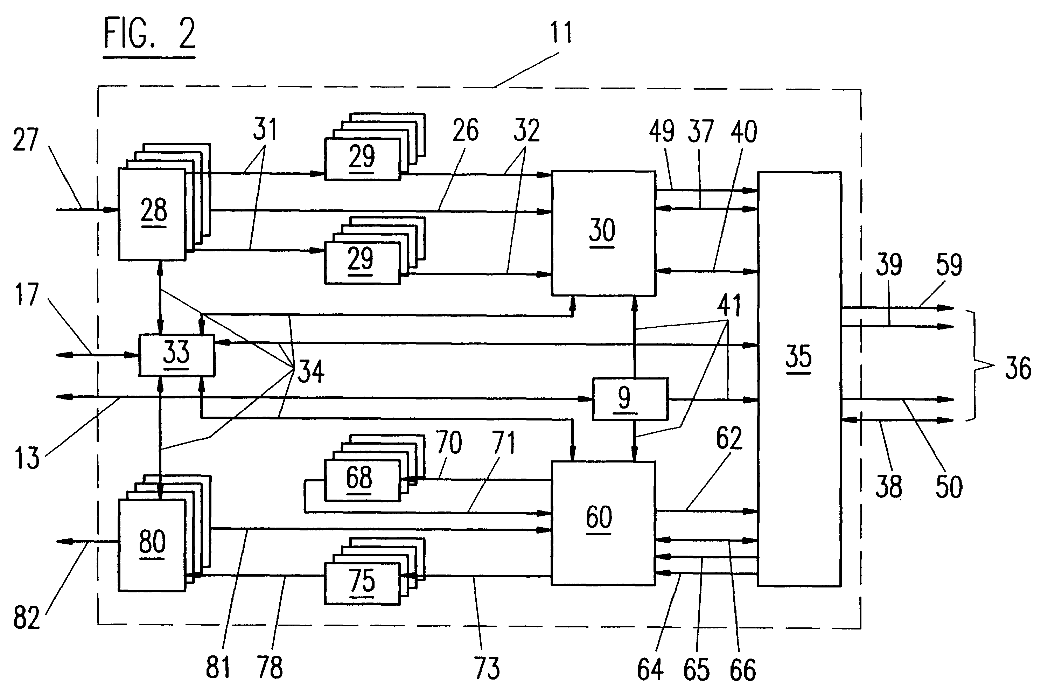

Als Hauptzähler wird dabei einer der Buszähler 9 (Fig. 2) verwendet, der sich innerhalb der Steuereinheit 11 der Ein-/Ausgabeeinheiten 5, 7 befindet. In der Praxis erfolgt dies dadurch, dass die Ein-/Ausgabeeinheiten 5, 7 im ATM-Switch in Steckleisten eingesetzt werden, die numeriert sind, z. B. von 0 bis 3, und entsprechend ihrer Nummer codiert sind, z. B. durch Verbindungen zwischen bestimmten Kontakten oder durch an Kontakten der Steckleiste fest anliegenden Spannungen. Es wird definiert, dass eine bestimmte Leiste, z. B. die Leiste 0, in jedem Fall mit einer Ein-/Ausgabeeinheit 5 bestückt sein muss. Der Zähler dieser Ein-/Ausgabeeinheit 5 wird durch die Codierung der Steckleiste als Hauptzähler konfiguriert, und sein Synchronanschluss 13 als Ausgang geschaltet. Diejenigen der Zähler 9 der übrigen Ein-/Ausgabeeinheiten 7 sind als Eingänge konfiguriert. Als Taktsignal für die Buszähler 9 dient der Bustakt, der auf dem Bus 3 zur Verfügung steht und von einem gängigen, nicht dargestellten Taktgenerator erzeugt wird.

Zusammenfassend wird also im ATM-Switch der Buszähler einer bestimmten Ein-/Ausgabeeinheit durch die Position dieser Ein-/Ausgabeeinheit im Switch als Hauptzähler konfiguriert und gibt Synchronsignale aus. Alle übrigen Buszähler der anderen Einheiten werden durch diese Synchronsignale mit dem Bus synchronisiert und gehen bei Eintreffen eines Synchronsignals in einen vorbestimmten Anfangszustand über.

Der Bus wird zur Reduktion der Geschwindigkeitsanforderung auf eine Datenbreite von 144 Bit ausgelegt, so dass eine Datenzelle (424 Bit) in drei Busphasen übertragen werden kann.

### Eingangskanal

Eine Ein-/Ausgabeeinheit 5, 7 umfasst im wesentlichen die Steuereinheit 11, den Boardcontroller 15, den Datenaustauschbaustein 19, eine Eingangsumsetzungstabelle 21 pro Eingang 24 und eine Ausgangsumsetzungstabelle 22 pro Ausgang 25. Der Datenaustauschbaustein 19 verbindet die Ein-/Ausgabeeinheit mit dem externen Datennetz über vier Netzeingänge 24 und vier Netzausgänge 25. Diese Netzein- und -ausgänge sind jeweils für byteweise Uebertragung, d. h. für 8 Bit gleichzeitig, ausgelegt. Eine über einen Netzeingang 24 in den Datenaustauschbaustein 19 gelangende Datenzelle wird von diesem zunächst in ein internes Format umgewandelt, indem der Adressteil durch den Inhalt des entsprechenden Eintrags in der Eingangsumsetzungstabelle 21 des Eingangs 24 ersetzt wird. In dieser, internen Form, gelangt die Datenzelle über die Leitungen 27 zur Eingangsschaltung 28 der Steuereinheit 11 (Fig. 2).

Obwohl die Uebertragungsrate von externem Netz und Switch übereinstimmen, ist die Phase der einkommenden Daten gegenüber dem internen Takt des Switch verschoben. Deswegen werden die Datenzellen zunächst in einem Eingangspuffer 29 gespeichert, aus dem sie vom bussynchronen Eingabemodul 30 abgeholt werden. Der Puffer 29 muss nur eine geringe Kapazität aufweisen, z. B. für 3 Datenzellen. Im Puffer wird dabei bevorzugt auch noch eine Aufweitung der Uebertragungsbreite der Daten von 8 Bit (Leitung 31) auf 24 Bit auf Leitung 32 durchgeführt. Das Eingabemodul 30 übernimmt, gesteuert vom Buszähler 9, die jeweils ältesten Daten aus dem Eingangspuffer 29 und führt eine nochmalige Aufweitung der Datenbreite auf 144 Bit durch (Leitung 49). Das Vorliegen einer Datenzelle im Eingangspuffer 29 und die Adresse im Eingangspuffer gelangt über die Leitung 26 von der Eingangsschaltung 28 zum Eingabemodul 30.

Jede Ein-/Ausgabeeinheit 5, 7 ist im vorliegenden Beispiel mit jeweils 4 Ein- und Ausgängen zum externen Netz ausgerüstet, die jeweils durch eine Nummer im Bereich 0 - 3 gekennzeichnet sind. Jeder derartige Eingang 24 verfügt über eine eigene Eingangsschaltung 28 und einen Eingangspuffer 29 und wird im folgenden als Eingangskanal bezeichnet. Das Eingabemodul 30 ist dagegen nur einmal vorhanden und hat daher auch Multiplexer-Funktionen. Die Daten gelangen schliesslich vom Eingabemodul 30 über das Businterface 35 auf den Busanschluss 36 und schliesslich auf den Bus 3. Die Daten (424 Bit) werden dabei in drei aufeinanderfolgenden Phasen des Bus 3 innerhalb der dem Eingangskanal zugeordneten Zeitscheibe auf den Bus gegeben. Zusätzlich wird auch die Zieladresse im internen Format, die Routingadresse, über die Leitungen 39 am Bus verfügbar gemacht.

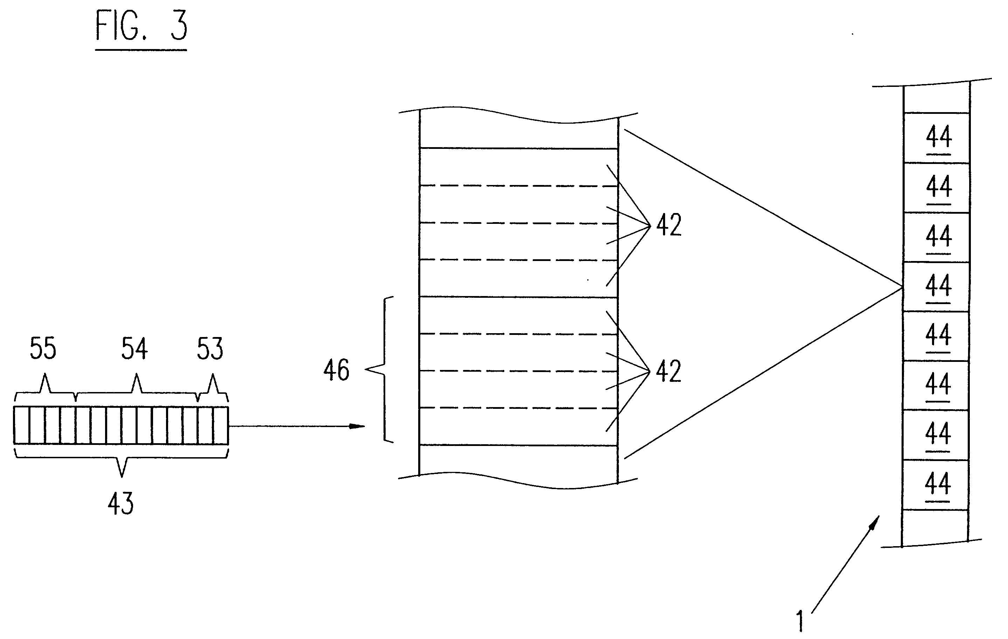

Jedem Eingangskanal ist noch ein Zähler im Eingabemodul 30 zugeordnet. Dieser Zähler dient dazu, anzugeben, in welcher Speicheradresse des dem Eingangskanal zugeordneten Puffers die Datenzelle gespeichert werden soll. Der Zähler arbeitet als Ringzähler und sein Stand wird bei jeder in den Puffer 44 (Fig. 3) des Eingangskanals übertragenen Datenzelle um eins verändert (s.u.: "Speicher"). Wird dabei ein bestimmter Endstand erreicht, so springt der Zähler wieder auf seinen Anfangswert zurück. Die Spanne zwischen Anfangswert und Endstand ist dabei kleiner und bevorzugt gleich der Anzahl der Speicherzellen 46 im Puffer 44. Der Stand des Zählers ist damit die unten beschriebene Zelladresse 54 im Speicher 1. Er wird über die Verbindung 37 zum Businterface 35 geleitet und von diesem auf den Bus gelegt. Ebenso gelangt auch die Nummer des Eingangs und die Nummer der Ein/Ausgabeeinheit 5 auf den Bus 3, die ebenfalls zur Adressierung des Speichers benötigt werden und zusammen die Kanalnummer 55 ergeben, die für jeden Eingangskanal innerhalb des Switch eindeutig ist. Die Steuerung der Datenübertragung zwischen Eingangsmodul 30 und Businterface 35 wird über die Verbindung 40 abgewickelt.

Sowohl der Eingabemodul 30 (Fig. 2) wie auch das Businterface 35 erhalten über die Leitungen 41 die vom Buszähler 9 erzeugte Information über den aktuellen Status des Bus 3, insbesondere darüber, wann sie auf den Bus 3 zugreifen können.

### Routingtabelle

Die Routingtabelle 45 erhält über den Anschluss 47 die interne, von einem Eingangskanal erzeugte Routingadresse und erzeugt daraus die Routinginformation. Die Routinginformation ist eine Bitmaske, in der jedes Bit für einen Ausgangskanal, d. h. einen Netzausgang 25, codiert wird. Ist das Bit gesetzt, z. B. logisch 1, so bedeutet dies, dass die Datenzelle mit der gerade anliegenden Routingadresse über den dem Bit entsprechenden Ausgangskanal wieder ausgegeben werden muss, et vice versa. Diese Bitmaske ist über den Anschluss 48 der Routingtabelle 45 (Fig. 1) auf separaten Leitungen des Bus 3 verfügbar.

### Speicher

Der Speicher 1 (Fig. 3) enthält eine Anzahl Speicherplätze 42 von Busbreite (144 Bit), die über Speicheradressen 43 angesprochen werden können. Jedem Eingangskanal ist dabei ein bestimmter Bereich 44 aufeinanderfolgender Adressen zugeordnet. Dieser Bereich 44 kann z. B. pro Eingangskanal 256 = 2⁸ Datenzellen aufnehmen. Der Einfachheit halber wird dazu nicht die Mindestzahl von 3 Speicherplätzen 42 benutzt, sondern 4 = 2². Damit setzt sich die Adresse 43 für einen Speicherplatz, als Binärzahl betrachtet, wie folgt aus drei Teilen zusammen: 2 Bits für die Platznummer 53 (Bit 0 - 1); 8 Bits für die Zelladresse 54 (Bits 2 - 9), wobei als (Speicher-)Zelle 46 vier aufeinanderfolgende Speicherplätze 42 aufgefasst werden, obwohl ja drei 144-Bit-Zyklen für eine Datenzelle genügen; und 4 Bits für die Eingangs-Kanalnummer 55 (Bits 10 - 13). Der Speicher 1 weist damit eine Gesamtkapazität von 2¹⁴ Speicherplätzen auf. Ein derartiger Speicher kann durch Parallelschalten von auf dem Markt erhältlichen, preiswerten Standardspeicherbauteilen zusammengesetzt werden, z. B. solchen mit 2¹⁴ Plätzen à 8 Bit, wovon dann 18 Stück parallel geschaltet werden müssten.

Ein verwendbarer Speichertyp ist beispielsweise der MCM62940A (Motorola) "Synchronous Static Burst RAM" mit einer Organisation von 32 x 2¹⁰ Bit x 9. Von diesen Speicherbausteinen müssen 16 Stück parallel geschaltet werden, um die Speicherwortbreite von 144 Bit zu erreichen.

Als Untergrenze für die Kapazität eines Bereichs 44 kann 2 Datenzellen angenommen werden. Die Kapazität kann jedoch je nach Gegebenheiten gewählt werden, also beliebig im Bereich 2 bis 256 Datenzellen und grösser. Die Obergrenze ist dabei u. a. durch den Aufwand für den Speicher vorgegeben, und die Untergrenze durch die Anforderung, dass ein Ueberlaufen der Puffer unter möglichst allen Umständen vermieden werden soll. Ein derartiges Ueberlaufen kann eintreten, wenn die Datenzellen nicht schnell genug wieder von allen betroffenen Ausgangskanälen verarbeitet werden können, und führt zum Verlust von Datenzellen. Bei der angegebenen Kapazität von 256 Datenzellen kann ein solches Ueberlaufen praktisch nicht auftreten. Bei kleinen Puffern bis 2 Datenzellen sind zusätzliche Sicherungsmassnahmen gegen ein Ueberlaufen in an sich bekannter Art einsetzbar.

Die Platznummer 53 wird aus der jeweiligen Busphase abgeleitet, wozu der Speicher 1 als Burstspeicher konfiguriert ist: er enthält einen Zähler, der zu Beginn der Uebertragung einer Datenzelle, also in der ersten Busphase, zurückgesetzt wird und in den folgenden Busphasen, in denen die übrigen Teile der Datenzelle übertragen werden, jeweils um eins weiterzählt. Das Signal für den Beginn der Uebertragung eines Pakets erkennt der Speicher am Signal 59 für einen Speicherzugriff, das von den Ein/Ausgabeeinheiten 11 erzeugt wird, am Bus 3 verfügbar und z. B. während eines Schreib- oder Lesezugriffs auf den Speicher aktiv ist, so dass der Uebergang von inaktiv zu aktiv den Beginn eines Zugriffs markiert.

Die Kanalnummer 55 wird vom Eingabemodul 30 erzeugt und über die Verbindungen 37 zum Businterface 35 übertragen, das sie als Teil der Speicheradresse auf den Bus gibt.

Der verbleibende Teil der Speicheradresse 43, die Zellennummer 54, wird schliesslich vom jeweiligen Eingangs- oder Ausgangskanal über den Anschluss 50, den Bus 3 und den Adressanschluss des Speichers 1 am Bus 3 an den Speicher übermittelt. Der Speicher 1 wird auch von der Ein/Ausgabeeinheit 5, 7 zwischen Einspeichern und Auslesen durch ein besonderes Schreiblesesignal 57 umgeschaltet, das vom Businterface 35 generiert wird je nachdem, ob ein Eingangskanal oder ein Ausgangskanal Zugriff auf den Bus hat. Alternativ kann das Schreiblesesignal auch vom Zustand der Buszähler 9 abgeleitet werden, da grundsätzlich während einer Zeitscheibe, die einem Eingangskanal zugeordnet ist, allenfalls in den Speicher 1 hineingeschrieben wird, und während einer Zeitscheibe, die einem Ausgangskanal zugeordnet ist, nur ein Lesezugriff auf den Speicher erfolgen kann. Die Datenübertragung geschieht über den Datenanschluss 58 des Speichers 1 am Bus 3.

Insgesamt verhält sich der Speicher für jede Ein-/Ausgabeeinheit 5, 7 so, als ob für jeden Eingangskanal ein Puffer 44 bestimmter Kapazität vorhanden ist. Der Puffer enthält eine bestimmte Anzahl Speicherzellen 46, die durch jeweils eine Zelladresse angesprochen werden und jeweils ein Datenzelle aufnehmen können. Zur Uebertragung einer Datenzelle in bzw. aus dem Speicher wird dieses in drei Teile zerlegt, die jeweils maximal 144 Bit umfassen. Diese drei Teile werden nacheinander in aufeinanderfolgenden Busphasen in die Speicherplätze 42 der Speicherzelle 46 eingeschrieben bzw. aus ihnen herausgelesen.

Das Konzept sieht genügend grosse Puffer vor, um ein Ueberlaufen zu verhindern. Es kann daher auf eine Kontrolle auf Füllungsgrad verzichtet werden. Die Puffer können also als nur von eingehenden Paketen gesteuerte Ringpuffer arbeiten.

### Ausgangskanal

Jede Ein-/Ausgabeeinheit 5, 7 (Fig. 2) enthält vier Ausgangskanäle. Für die vier Ausgangskanäle einer Ein-/Ausgabeeinheit 5, 7 ist ein Ausgabemodul 60 vorhanden, das über das Businterface 35 mit dem Bus 3 verbunden ist. Die Funktion des Ausgabemoduls 60 ist im wesentlichen invers zu derjenigen des Eingabemoduls 30. Es verfügt über eine Ausgabeleitung 62 zur Ausgabe einer Zelladresse 54 für den Speicher 1 an das Businterface 35 und ansonsten Eingänge 64 für die Daten der adressierten Speicherzelle, Eingänge 65 für das Routing-Info und weitere Leitungen 66 zur Regelung des Datentransfers zwischen dem Businterface 35 und dem Ausgabemodul 60. Die Eingänge 41 stellen die Verbindung zum Buszähler 9 und eine der Leitungen 34 die Verbindung zum Boardcontrollerinterface 33 her.

Am Ausgabemodul 60 ist die Zellenzeiger-Queue 68, d. h. eine Warteschlange für Zellenzeiger, über einen Ein- 70 und einen Ausgang 71 angeschlossen. Ein weiterer Ausgang 73 des Ausgabemoduls 60 führt zum Ausgangspuffer 75. Der Ausgangspuffer 75 führt im wesentlichen die umgekehrte Funktion zum Eingangspuffer 29 durch, nämlich die Phasenanpassung zwischen dem internen Switchtakt und dem vom externen Netz vorgegebenen Takt. Auch der Ausgangspuffer 75 hat nur eine relativ geringe Kapazität für drei Datenzellen.

Vom Ausgangspuffer 75 gelangen die Datenzellen über die Ausgänge 78 zur Ausgangsschaltung 80, die die Anpassung an den Netzausgang 25 vornimmt. Die Zellenzeiger-Queue 68, der Ausgangspuffer 75 und die Ausgangsschaltung 80 ist für jeden Ausgangskanal einmal vorhanden, also in vierfacher Ausführung in jeder Ein-/Ausgabeeinheit 5, 7. Die Queue kann 256 Zeiger aufnehmen. Durch die relativ grosse Kapazität wird, wie auch bei den Eingangskanalpuffern 44, die nötige Sicherheit gegen Ueberfüllung erreicht. Da die Zeiger hier nur je 16 Bit belegen, ist die Speicherkapazität doch so gering, dass eine Ausführung als integrierte Schaltung zusammen mit den anderen Funktionen möglich ist.

Das Ausgabemodul 60, das durch z. B. die Codierung des Steckplatzes der Ein-/Ausgabeeinheit die Nummer der Ein-/Ausgabeeinheit 5, 7 im Switch kennt, kontrolliert laufend, ob in der gerade auf dem Bus 3 vorhandenen Routinginformation das jeweilige Bit für einen seiner Ausgangskanäle gesetzt ist. Tritt dieser Fall ein, so übernimmt das Ausgabemodul 60 die am Bus anliegende Zelladresse 54 für den Speicher 1 und schreibt sie in die Zellenzeiger-Queue 68 des betreffenden Ausgangskanals.

Die mit dem externen Netz synchronisierte Ausgangsschaltung 80 meldet dem Ausgabemodul 60 über die Verbindung 81 die Bereitschaft, eine Zelle zu senden. Ist dies der Fall, kontrolliert das Ausgangsmodul 60 zu Anfang der Zeitscheibe, die einem der Ausgangskanäle des Ausgangsmoduls 60 zugeordnet ist, ob in der Zellenzeiger-Queue 68 dieses Ausgangskanals ein oder mehrere Zellenzeiger gespeichert sind. In diesem Fall wird zu Anfang der dem Ausgangskanal zugeordneten Zeitscheibe der am längsten wartende Zellenzeiger aus der Zellenzeiger-Queue 68 entnommen und vom Ausgabemodul 60 über das Businterface 35 zusammen mit einem Lesesignal 57 für den Speicher 1 auf den Bus 3 gegeben. Diese Adresse muss, da die Datenzelle von jedem der maximal 16 Eingangskanäle des Switches in den Speicher geschrieben worden sein kann, auch die Kanalnummer 55 umfassen. Diese Kanalnummer wurde vom Ausgabemodul 60 zusammen mit der Zelladresse 54 in die Zellenzeiger-Queue 68 eingespeichert.

Der vom Speicher ausgegebene Inhalt der angesprochenen Speicherzelle 46, also die auszugebende Datenzelle, gelangt über das Businterface und über die noch 144 Bit breiten Datenleitungen 64 in drei aufeinanderfolgenden Busphasen zum Ausgangsmodul 60. Das Ausgangsmodul 60 führt, umgekehrt zum Eingangsmodul 30, eine Verengung auf die nur 24 Bit breiten Datenausgänge 73 zum Ausgangspuffer 75 durch.

Sofern im Ausgangspuffer 75 Daten vorhanden sind, werden diese synchron zum externen Netz von der Ausgangsschaltung 80 in chronologischer Reihenfolge auf dem jeweiligen Ausgang 82 ausgegeben.

Gemäss Fig. 1 gelangen die Daten von den Ausgängen 82, die noch im internen Format vorliegen, zum Datenaustauschbaustein 19. In diesem Baustein 19 wird mittels der Ausgangsumsetzungstabelle 22 die Datenzelle in das externe Format umgesetzt und über die Ausgänge 25 des Switches in das externe Netz eingespeichert. Die Netzausgänge 25 sind wie auch die Eingänge 24 für byteweise Datenübertragung ausgelegt.

Die Initialisierung des Switches, und insbesondere der Eingangsumsetzungs- 21, Ausgangsumsetzungs- 22 sowie der Routingtabelle wird vom Boardcontroller 15 vorgenommen. Ebenso führt er die während des Betriebes nötigen Aenderungen in der Konfiguration des Switches durch, insbesondere Aenderungen in der Routingtabelle 45 beim Auf- und Abbau von Datenverbindungen. Er ist dafür über die Anschlüsse 17 mit der Steuereinheit 11 und dem Datenaustauschbaustein 19 verbunden.

Mit dem oben anhand eines Beispiels exemplifizierten Konzept für einen ATM-Switch kleiner Kapazität ist es möglich, mit geringem Aufwand den nötigen und insgesamt relativ grossen Pufferspeicher in einem für alle Ein- und Ausgänge gemeinsamen Speicher 1 zu realisieren. Die dann noch verbleibenden Funktionen für die Ein-/Ausgabeeinheiten lassen sich beim derzeitigen Stand der Technik problemlos als integrierte Schaltungen realisieren, insbesondere auch mit programmierbaren Logikschaltungen oder anwendungsspezifisch hergestellten integrierten Schaltungen oder ASICs ("Application Specific Integrated Circuits"). Ein wesentlicher Bestandteil dabei ist einerseits die feste Zuordnung von Speicherbereichen zu den in der maximalen Ausbaustufe des Switches vorhandenen Eingängen und die feste Zuordnung von Zeitscheiben auf dem Bus, der die Verbindung zwischen der Ein-/Ausgabeeinheiten und dem Speicher herstellt, zu den Ein- und Ausgangskanälen ebenfalls der maximalen Ausbaustufe des Switches. Hierdurch ist es möglich, die zur Steuerung des Datenverkehrs nötige Logik auf ein Minimum zu reduzieren. Da ein Buszyklus sich aus den Zeitscheiben für sämtliche möglichen Ein- und Ausgangskanäle zusammensetzt, kann jede Funktionseinheit des Switches allein durch Mitzählen des Bustaktes, ausgehend vom Beginn des Buszyklus, ermitteln, welche Einheit gerade Daten über den Bus überträgt. Dadurch ist auch eine wesentliche Reduzierung der Verbindungsleitungen zwischen den verschiedenen Funktionseinheiten des Switches möglich.

In der angegebenen Konfiguration sind hierfür nur drei Leitungen nötig, nämlich eine, die festlegt, ob der interne Taktzähler der Funktionseinheit das Bussynchronisationssignal erzeugen oder entgegennehmen soll, eine, über die das Synchronisationssignal von demjenigen Bustaktzähler, der das Bussynchronisationssignal erzeugt, zu den übrigen Zählern gelangt, und eine für den Bustakt. Im Extremfall genügt jedoch auch nur eine Leitung, nämlich für das Bussynchronisationssignal, wenn der Bustaktzähler, der das Synchronisationssignal erzeugt, fest vorgegeben ist, und der Bustakt in der Funktionseinheit durch einen lokalen Taktgenerator erzeugt wird.

Ein weiterer Vorteil des vorgestellten Konzeptes besteht darin, dass die mehrfache Speicherung von Datenzellen, die für mehrere Ausgänge bestimmt sind, vermieden wird. Sie werden nur einmal im Speicher abgelegt und zu gegebener Zeit von den jeweiligen Ausgangskanälen wieder ausgelesen.

Die Verbindung zum Speicher kann im Prinzip von 8 Bit Breite, wie üblicherweise die Daten an den Eingängen des Switches anliegen, bis zur vollen Breite der Datenzelle (53 Bytes) ausgelegt werden. Die minimale Breite führt auch zu einer minimalen Anzahl Verbindungsleitungen, benötigt jedoch eine entsprechend grosse Anzahl Busphasen zur Uebertragung, was angesichts der festen Vorgabe der Dauer der Zeitscheiben praktisch nicht erfüllbare Anforderungen an die Zugriffszeiten der Speicherbausteine ergibt. Die maximale Breite führt dagegen zu einer sehr grossen Anzahl Leitungen, die für den Bus benötigt werden, sowie zu einer sehr grossen Anzahl von Speicherbausteinen, die parallel geschaltet werden müssen. Als guter Kompromiss hat sich die im Beispiel genannte Ausführung erwiesen, die jede Datenzelle in drei Teilen zu je 18 Bytes überträgt. Im Speicher werden dabei nur drei der vier Speicherplätze einer Speicherzelle verwendet. Diese Lösung gibt einen guten Mittelweg zwischen Breite des Bus, Geschwindigkeit der Datenübertragung und Aufwand für den Speicher.

Mit der Vorgabe von 256 Speicherzellen pro Eingangseinheit kann dann der Speicher aus Bausteinen mit jeweils 2¹⁴ Speicherplätzen aufgebaut werden, die marktgängig und daher preiswert sind. Die nötige Datenbreite von 18 Bytes = 144 Bits erhält man durch entsprechendes Parallelschalten dieser Speicherbausteine. Möglich ist auch das Zusammensetzen aus Speicherbausteinen geringerer Kapazität wie auch ein anderes Bus-Timing, sodass z. B. die freie vierte Busphase entfällt. Es ist auch denkbar, den Bus schmaler auszuführen, z. B. nur 14 Bytes = 112 Bits breit. Damit wird auch die vierte Busphase zur Uebertragung einer Datenzelle benutzt und andererseits kann der Speicher schmaler, jedoch ohne Reserve ausgeführt werden.

Denkbar ist auch, dass eine Zeitscheibe des Bus nur die Uebertragung jeweils eines Teils einer Datenzelle gestattet, also z. B. eine Datenzelle in 4 aufeinanderfolgenden Buszyklen übertragen wird. Damit hierbei nicht die Uebertragung der Platznummer 53 benötigt wird, wird vorteilhaft wieder diejenige Anzahl Buszyklen, die zur Uebertragung einer Datenzelle nötig ist, als eine Gruppe aufgefasst und jeweils beim ersten Buszyklus der Gruppe das Synchronisationssignal für den Bus erzeugt.

Die dargestellte Ausführung ist nur als Beispiel für eine bevorzugte Ausführung der Erfindung zu verstehen. Neben den aufgeführten sind dem Fachmann weitere Abwandlungen zugänglich, ohne den Bereich der Erfindung zu verlassen.

## Patentansprüche

1. Vorrichtung zur Vermittlung in digitalen Datennetzen, in denen die Datenübertragung in Form digitaler Datenzellen erfolgt, die jeweils aus einem Daten- und einem Steuerteil bestehen, wobei der Steuerteil ein Adressteil aufweist, mit mindestens zwei Eingängen (24) und zwei Ausgängen (25) einem Speicher (1), der für jeden Eingang (24) jeweils einen Pufferbereich (44) bestehend aus Speicherzellen (46) aufweist, in die jeweils mindestens eine Datenzelle speicherbar ist, dadurch gekennzeichnet, dass von jedem Eingang (24) in den ihm zugeordneten Pufferbereich (44) Datenzellen abspeicherbar sind, für jeden Ausgang Zugriffsmöglichkeit auf jede, in irgendeinem Pufferbereich (44) gespeicherte Datenzelle besteht und mindestens die Datenverbindung zwischen Eingängen (24), Ausgängen (25) und dem Speicher durch einen synchronen Bus (3) hergestellt ist, so dass jedem Eingang (24) und jedem Ausgang (25) vordefinierte Zeitscheiben für eine Datenübertragung über den Bus (3) assignierbar sind.

2. Vorrichtung gemäss Anspruch 1, dadurch gekennzeichnet, dass jeder Pufferbereich (44) mindestens 2 Speicherzellen (46) und bevorzugt 256 Speicherzellen (46), aufweist.

3. Vorrichtung gemäss einem der Ansprüche 1 bis 2, dadurch gekennzeichnet, dass jeweils mindestens zwei Eingänge (24) und mindestens zwei Ausgänge (25) in je einer Ein/Ausgabeeinheit (5) zusammengefasst sind, eine erste Ein/Ausgabeeinheit (5) vorhanden ist und mindestens eine bis zu einer Maximalzahl an Ein/Ausgabeeinheiten (5, 7) zweite Ein/Ausgabeeinheiten (7) zusätzlich in die Vorrichtung einsetzbar und an ihr anschließbar sind, um die Anzahl der Ein- und Ausgänge (24) bzw. (25) zu vergrößern.

4. Vorrichtung gemäss einem der Ansprüche 1 bis 3, dadurch gekennzeichnet, dass die Datenübertragung über den Bus (3) durch einen Bustakt gesteuert ist.

5. Vorrichtung gemäss Anspruch 4, dadurch gekennzeichnet, dass die Datenübertragung über den Bus in Buszyklen erfolgt, wobei jeder Buszyklus in mindestens soviele Zeitscheiben unterteilt ist, wie bei der Maximalzahl von Ein/Ausgabeeinheiten (5) insgesamt Eingänge (24) und Ausgänge (25) vorhanden sind, und jede Zeitscheibe einem Eingang (24) bzw. einem Ausgang (25) fest zugeordnet ist.

6. Vorrichtung gemäss Anspruch 5, dadurch gekennzeichnet, dass zu jedem Eingang (24) und jedem Ausgang (25) Bussteuermittel vorhanden sind, um während der dem Ein-(24) oder Ausgang (25) zugeordneten Zeitscheibe ein Signal zu erzeugen, das für einen Eingang (24) eine Datenübertragung zum Speicher (1) hin und für einen Ausgang (25) aus dem Speicher (1) zum Ausgang (25) anzeigt, und dass diese Signale allein oder in Verbindung mit einem weiteren, von den Bussteuermitteln erzeugten Signal die Nutzung der Zeitscheibe zur Datenübertragung durch den Ein-(24) bzw. Ausgang (25), insbesondere Anfang und Ende der Nutzung, anzeigt.

7. Vorrichtung gemäss einem der Ansprüche 5 bis 6, dadurch gekennzeichnet, dass jede Zeitscheibe in mindestens zwei Busphasen unterteilt ist, wobei in jeder Busphase ein Teil einer Datenzelle über den Bus (3) übertragbar ist, eine Zyklusgruppe einen Buszyklus umfasst, der Bus (3) eine diesem Teil einer Datenzelle entsprechende Anzahl der Übertragung der Daten einer Datenzelle dienende Datenleitungen aufweist, und dass die in allen Busphasen einer Zeitscheibe über den Bus (3) übertragbare Datenmenge mindestens gleich derjenigen einer Datenzelle ist.

8. Vorrichtung gemäss einem der Ansprüche 5 bis 6, dadurch gekennzeichnet, dass jede Zeitscheibe aus mindestens einer Busphase besteht, wobei in jeder Busphase ein Teil einer Datenzelle über den Bus (3) übertragbar ist, der Bus (3) eine diesem Teil entsprechende Anzahl, der Übertragung der Daten einer Datenzelle dienende Datenleitungen aufweist, mindestens so viele Zyklen des Bus (3) zu einer Zyklusgruppe zusammengefasst sind, daß die Datenmenge, die in allen Busphasen der gleichen Zeitscheiben aller Zyklen der Zyklusgruppe über den Bus (3) übertragbar ist, mindestens gleich derjenigen einer Datenzelle ist.

9. Vorrichtung gemäss einem der Ansprüche 1 bis 8, dadurch gekennzeichnet, dass jede Speicherzelle (46) aus mindestens zwei Speicherplätzen (42) besteht, wobei die Kapazität aller Speicherplätze einer Speicherzelle (46) zumindest zur Speicherung einer Datenzelle ausreichend ist.

10. Vorrichtung gemäss Anspruch 9, dadurch gekennzeichnet, dass in jeden Speicherplatz (42) zumindest der in einer Busphase übertragbare Anteil einer Datenzelle speicherbar ist.

11. Vorrichtung gemäss einem der Ansprüche 7 bis 8, dadurch gekennzeichnet, dass der Anschluss des Speichers (1) sowie die Anschlüsse der Ein- (24) und Ausgänge (25) an den Bus (3) jeweils mindestens soviele Bits gleichzeitig übertragen können, wie der in einer Busphase übertragbare Teil einer Datenzelle beinhaltet.

12. Vorrichtung gemäss einem der Ansprüche 1 bis 11, dadurch gekennzeichnet, dass jedem Eingang (24) eine innerhalb der Vorrichtung eindeutige Eingangsnummer (55) zugeordnet ist, und sich die Adresse eines Speicherplatzes (42) aus der Zelladresse (54), der Eingangsnummer (55), der Sequenznummer der Busphase innerhalb einer Zeitscheibe und der Sequenznummer des Buszyklus innerhalb der Zyklusgruppe zusammensetzt.

13. Vorrichtung gemäss einem der Ansprüche 1 bis 9, dadurch gekennzeichnet, dass jedem Eingang (24) eine innerhalb der Vorrichtung eindeutige Eingangsnummer (55) zugeordnet ist, und sich die Adresse für eine Speicherzelle (46) zumindest aus einer Zelladresse (54) und der Nummer (55) des Eingangs (24) zusammensetzt, in dessen Pufferbereich (44) die Speicherzelle (46) liegt, und Mittel im Speicher (1) vorhanden sind, um die in verschiedenen Busphasen übertragenen Teile einer Datenzelle in verschiedene Speicherplätze (42) der adressierten Speicherzelle (46) zu speichern oder aus diesen auszulesen.

14. Vorrichtung gemäss einem der Ansprüche 4 bis 13, dadurch gekennzeichnet, dass Mittel (9) vorhanden sind, um ein Synchronisationssignal zu erzeugen, das den Beginn eines Zyklus kennzeichnet.

15. Vorrichtung gemäss Anspruch 14, dadurch gekennzeichnet, dass das Mittel zur Erzeugung des Synchronisationssignals ein vom Bustakt gesteuerter Zähler (9) in der ersten Ein/Ausgabeeinheit (5) ist, der einen Ausgang für das Synchronisationssignal aufweist, und jede zweite Ein-/Ausgabeeinheit (7) einen Zähler (9) mit Eingängen für das Synchronisationssignal aufweist.

16. Vorrichtung gemäss einem der Ansprüche 1 bis 15, dadurch gekennzeichnet, dass eine Routingtabelle mit Einträgen vorhanden ist, wobei die Einträge für einen Adressteil oder einen Bereich von Adressteilen von über einen Eingang (24) eingelangten Datenzellen jeweils eine Routinginformation vorgeben, die angibt, über welche Ausgänge (25) die Datenzelle wieder in das Datennetz ausgegeben werden muss.

17. Vorrichtung gemäss Anspruch 16, dadurch gekennzeichnet, dass die Routinginformation aus einer Bitmaske besteht, in der jedem Ausgang (25) ein Bit zugeordnet ist, und der Zustand eines Bits angibt, ob die Datenzelle über den dem Bit zugeordneten Ausgang (25) an das Datennetz wieder ausgegeben werden muß.

18. Vorrichtung gemäss einem der Ansprüche 1 bis 17, dadurch gekennzeichnet, dass für jeden Ausgang (25) eine Zellenzeiger-Queue (68) vorhanden ist, die sich aus Queueplätzen zusammensetzt, wobei in jedem Queueplatz jeweils ein Zeiger auf eine Speicherzelle (46) im Speicher (1) speicherbar ist, daß die Queue (68) einen Eingang (70) und einen Ausgang (71) aufweist, wobei besagte Zeiger über den Eingang (70) in die Queue (68) einspeicherbar sind, und die Zeiger am Ausgang der Queue in der chronologischen Reihenfolge wieder auslesbar sind, in der sie in die Queue eingespeichert wurden.

19. Vorrichtung gemäss Anspruch 18, dadurch gekennzeichnet, dass mit den Zellenzeiger-Queues (68) Mittel (60, 55) in Verbindung stehen, die die Routing-Informationen auf dem Bus (3) darauf überwachen, ob das einem Ausgang (25) zugeordnete Bit anzeigt, dass eine Datenzelle, die für diesen Ausgang bestimmt ist, im momentan ablaufenden Buszyklus in den Speicher (1) übertragen wird, und in diesem Fall die Adresse der Speicherzelle im Speicher (1) aus der Zelladresse (54) und der Buszyklusnummer ableitet und in die Zellenzeiger-Queue (68) des Ausgangs einspeichert.

20. Vorrichtung gemäss einem der Ansprüche 4 bis 18, dadurch gekennzeichnet, dass für jeden Ausgang (25) und jeden Eingang (24) Phasenanpassungsmittel (75 bzw. 29) vorhanden sind, die eine Anpassung der Phasenlage zwischen den Datenzellen des Datennetzes und dem Bustakt des Bus (3) durchführen.

21. Vorrichtung gemäss Anspruch 20, dadurch gekennzeichnet, dass die Phasenanpassungsmittel aus je einem Register (29, 75) pro Eingang (24) und pro Ausgang (25) bestehen, wobei das Register mindestens eine Datenzelle, bevorzugt zwei und weiter bevorzugt drei Datenzellen speichern kann, und das Einschreiben in und das Auslesen aus dem Register mit unterschiedlichem Takt erfolgt.

## Claims

1. Device for switching in digital data networks in which the transfer of data takes place in the form of digital data cells consisting each of a data part and a control part, the control part comprising an address part, the device comprising at least two inputs (24) and two outputs (25), a memory (1) having a buffer area (44) for each input (24), the buffer area consisting of storage cells (46) in each of which at least one data cell is capable of being stored, characterised in that data cells from each input (24) are capable of being stored in its associated buffer area (44), each output is capable of accessing any data cell stored in any buffer area (44), and at least the data connection between the inputs (24), the outputs (25) and the memory is provided by a synchronous bus (3) in such a manner that predefined time slices for a data transmission on the bus (3) can be assigned to each input (24) and each output (25).

2. Device according to claim 1, characterised in that each buffer area (44) comprises at least 2 storage cells (46) and preferably 256 storage cells (46).

3. Device according to one of claims 1 or 2, characterised in that at least two inputs (24) and two outputs (25) are combined in a respective input/output unit (5), in that a first input/output unit (5) is provided, and, up to a maximum number of input/output units, at least one second input/output unit(s) (7) is/are capable of being built in and connected to the device in order to increase the number of inputs and outputs (24 resp. 25).

4. Device according to one of claims 1 to 3, characterised in that the data transfer on the bus (3) is controlled by a bus clock.

5. Device according to claim 4, characterised in that the data transfer on the bus is effected in bus cycles, each bus cycle being divided into at least as many time slices as the total number of inputs (24) and outputs (25) in the case of a maximum number of input/output units (5), and each time slice being fixedly allocated to an input (24) resp. and output (25).

6. Device according to claim 5, characterised in that bus control means are provided for each input (24) and each output (25) in order to generate, during the time slice which is allocated to the respective input (24) or output (25), a signal which indicates a data transfer to the memory (1) in the case of an input (24) and from the memory (1) to the output (25) in the case of an output (25), and in that the signal alone or in combination with another signal which is generated by the bus control means indicates the utilisation of the time slice for a data transfer by the input (24) or the output (25), more particularly the beginning and the end of the utilisation.

7. Device according to one of claims 5 or 6, characterised in that each time slice is divided into at least two bus phases, each bus phase permitting the transfer by the bus (3) of a part of a data cell, in that a bus cycle comprises a cycle group, in that the bus (3) comprises a number of data lines serving for the transfer of the data of a data cell which corresponds to that part of a data cell, and in that the quantity of data which is transferred by the bus in all bus phases of a time slice is at least equal to that of a data cell.

8. Device according to one of claims 5 or 6, characterised in that each time slice is composed of at least one bus phase, each of the bus phases permitting the transfer by the bus (3) of a part of a data cell, in that the bus (3) comprises a number of data lines serving for the transfer of the data of a data cell which corresponds to that part, and in that at least so many cycles of the bus (3) are combined to form a cycle group that the quantity of data which is transmitted by the bus in all bus phases of the same time slices of all cycles of the cycle group is at least equal to that of a data cell.

9. Device according to one of claims 1 to 8, characterised in that each storage cell (46) consists of at least two storage locations (42), the capacity of all storage locations of one storage cell (46) being sufficient for the storage of at least one data cell.

10. Device according to claim 9, characterised in that at least that portion of a data cell which is capable of being transferred in one bus phase can be stored in each storage location (42).

11. Device according to one of claims 7 or 8, characterised in that the connection of the memory (1) as well as the connections of the inputs (24) and outputs (25) to the bus (3) are each capable of simultaneously transmitting at least as many bits as are comprised in the part of a data cell which can be transferred in one bus phase.

12. Device according to one of claims 1 to 11, characterised in that an input number (55) which is unequivocal within the device is allocated to each input (24), and in that the address of a storage location (42) is composed of the cell address (54), the input number (55), the sequence number of the bus phase within a time slice, and the sequence number of the bus cycle within the cycle group.

13. Device according to one of claims 1 to 9, characterised in that an input number (55) which is unequivocal within the device is allocated to each input (24), and in that the address of a storage location (42) is composed at least of a cell address (54) and of the number (55) of the input (24) in whose buffer area (44) the storage cell (46) is located, and in that means are provided in the memory in order to store or read out the parts of a data cell transmitted in different bus phases in resp. from different storage locations (42) of the addressed storage cell (46).

14. Device according to any one of claims 4 to 13, characterised in that means (9) are provided in order to generate a synchronisation signal which designates the beginning of a cycle.

15. Device according to claim 14, characterised in that the means for generating the synchronisation signal is a counter (9) in the first input/output unit (5) which is controlled by the bus clock and comprises an output for the synchronisation signal, and in that each one of the second input/output units (7) comprises a counter (9) which is provided with inputs for the synchronisation signal.

16. Device according to one of claims 1 to 15, characterised in that a routing table comprising entries is provided, each one of the entries defining a routing information for an address part or a range of address parts of data cells arriving by an input (24), the routing information indicating by which outputs (25) the data cell must be output into the data network.

17. Device according to claim 16, characterised in that the routing information consists of a bit mask wherein a bit is allocated to each output (25) and the state of a bit indicates whether the data cell must be output to the network by the output (25) which is assigned to that bit.

18. Device according to one of claims 1 to 17, characterised in that a cell pointer queue (68) is provided for each output (25), the queue being constituted by queue locations in each of which a pointer for a storage cell (46) in the memory (1) is capable of being stored; in that the queue (68) comprises an input (70) and an output (71), the pointers being capable of being stored in the queue (68) via the input (70); and in that the pointers are capable of being read out at the output of the queue in the chronological sequence according to which they have been stored in the queue.

19. Device according to claim 18, characterised in that means (60, 55) are connected to the cell pointer queues (68) which monitor the routing information on the bus (3) as to whether the bit which is allocated to an output (25) indicates that a data cell which is destined for this output is being transferred to the memory during the current bus cycle, and which, in this case, derive the address of the storage cell in the memory (1) from the cell address (54) and the bus cycle number and store it in the cell pointer queue (68) of the output.

20. Device according to one of claims 4 to 18, characterised in that phase matching means (75 resp. 29) are provided for each output (25) and each input (24) which perform an adaptation of the phase relation between the data cells of the data network and the bus clock of the bus (3).

21. Device according to claim 20, characterised in that the phase matching means consist of a respective register (29, 75) for each input (24) and each output (25), the register being capable of storing at least one data cell, preferably two and more preferably three data cells, and in that the writing and the readout into resp. from the register is effected at different clock frequencies.

## Revendications

1. Dispositif pour la commutation dans des réseaux de données numériques dans lesquels la transmission des données a lieu sous forme de cellules de données numériques composées chaque fois d'une partie données et d'une partie commande, ladite partie de commande comportant une partie adresse, ledit dispositif comprenant au moins deux entrées (24) et deux sorties (25), une mémoire (1) qui présente pour chaque entrée (24) un domaine tampon (44) particulier formé de cellules de mémoire (46) capables de mémoriser chaque fois au moins une cellule de données, caractérisé en ce que chaque entrée (24) est capable de mettre en mémoire des cellules de données dans le domaine tampon (44) y associé, que chaque sortie est capable d'accéder à toute cellule de données mémorisée dans tout domaine tampon (44), et qu'au moins la connexion des données entre les entrées (24), les sorties (25) et la mémoire est établie par un bus synchrone (3) de telle manière que des tranches d'exécution prédéfinies pour une transmission de données par le bus peuvent être attribuées à chaque entrée (24) et à chaque sortie.

2. Dispositif selon la revendication 1, caractérisé en ce que chaque domaine tampon (44) présente au moins 2 cellules de mémoire (46) et préférablement 256 cellules de mémoire (46).

3. Dispositif selon l'une des revendications 1 à 2, caractérisé en ce qu'au moins deux entrées (24) et au moins deux sorties (25) sont chaque fois réunies dans une unité d'entrée/sortie (5), qu'une première unité d'entrée/sortie est pourvue, ainsi que, jusqu'à un nombre maximum d'unités d'entrée/sortie (5, 7), au moins une deuxième unité d'entrée/sortie (7), lesquelles sont capables d'être insérées dans ledit dispositif et connectées à ce dernier afin d'en augmenter le nombre d'entrées et de sorties (24) resp. (25).

4. Dispositif selon l'une des revendications 1 à 3, caractérisé en ce que la transmission de données par le bus (3) est commandée par une horloge de bus.

5. Dispositif selon la revendication 4, caractérisé en ce que la transmission de données par le bus est effectuée dans des cycles de bus, chaque cycle de bus étant divisé en au moins autant de tranches d'exécution que le nombre total d'entrées (24) et de sorties (25) lors du nombre maximum d'unités d'entrée/sortie (5), et que chaque tranche d'exécution est fixement attribuée à une entrée (24) resp. une sortie (25).

6. Dispositif selon la revendication 5, caractérisé en ce que des moyens de commande de bus sont pourvus pour chaque entrée (24) et chaque sortie (25) afin de générer, pendant la tranche d'exécution attribuée à l'entrée (24) ou à la sortie (25), un signal indiquant une transmission de données vers la mémoire (1) dans le cas d'une entrée (24) ou de la mémoire (1) vers la sortie (25) dans le cas d'une sortie, et que ces signaux, seuls ou conjointement avec un signal supplémentaire généré par lesdits moyens de commande de bus, indiquent l'utilisation de la tranche d'exécution pour la transmission de données par l'entrée (24) resp. la sortie (25), plus particulièrement le début et la fin de l'utilisation.

7. Dispositif selon l'une des revendications 5 à 6, caractérisé en ce que chaque tranche d'exécution est divisée en au moins deux phases de bus, chaque phase de bus permettant la transmission d'une partie d'une cellule de données par le bus (3), qu'un groupe de cycles comprend un cycle de bus, que le bus (3) comporte un nombre de lignes à données pour la transmission des données d'une cellule de données qui correspond à ladite partie d'une cellule de données, et que la quantité de données pouvant être transmise par le bus (3) dans toutes les phases de bus d'une tranche d'exécution est au moins égale à celle d'une cellule de données.

8. Dispositif selon l'une des revendications 5 à 6, caractérisé en ce que chaque tranche d'exécution consiste d'au moins une phase de bus, chaque phase de bus permettant la transmission d'une partie d'une cellule de données par le bus (3), que le bus (3) comporte un nombre de lignes à données pour la transmission des données d'une cellule de données qui correspond à ladite partie, et qu'au moins autant de cycles de bus (3) sont réunis dans un groupe de cycles que la quantité de données pouvant être transmise par le bus dans toutes les phases de bus des mêmes tranches d'exécution de tous les cycles dudit groupe de cycles est au moins égale à celle d'une cellule de données.

9. Dispositif selon l'une des revendications 1 à 8, caractérisé en ce que chaque cellule de mémoire (46) consiste d'au moins deux emplacements de mémoire (42), la capacité de tous les emplacements de mémoire d'une cellule de mémoire (46) étant suffisante pour mémoriser au moins une cellule de données.

10. Dispositif selon la revendication 9, caractérisé en ce que chaque emplacement de mémoire (42) permet de mettre en mémoire au moins la partie d'une cellule de données qui peut être transmise dans une phase de bus.

11. Dispositif selon l'une des revendications 7 à 8, caractérisé en ce que la connexion de la mémoire (1) ainsi que les connexions des entrées (24) et des sorties (25) au bus (3) sont capables de transmettre simultanément au moins autant de bits que comporte la partie d'une cellule de données qui peut être transmise dans une phase de bus.

12. Dispositif selon l'une des revendications 1 à 11, caractérisé en ce qu'un nombre d'entrée (55) univoque à l'intérieur du dispositif est attribué à chaque entrée (24), et que l'adresse d'un emplacement de mémoire (42) est composée de l'adresse de la cellule (54), du nombre d'entrée (55), du nombre de séquence de la phase de bus à l'intérieur d'une tranche d'exécution et du nombre de séquence du cycle de bus à l'intérieur du groupe de cycles.

13. Dispositif selon l'une des revendications 1 à 9, caractérisé en ce qu'un nombre d'entrée (55) univoque à l'intérieur du dispositif est attribué à chaque entrée (24), et que l'adresse d'une cellule de mémoire (46) est composée au moins d'une adresse de cellule (54) et du nombre (55) de l'entrée (24) dans le domaine tampon (44) duquel se trouve la cellule de mémoire (46), et que la mémoire (1) comporte des moyens permettant de mémoriser les parties d'une cellule de données transmises dans différentes phases de bus dans différents emplacements de mémoire (42) de la cellule de mémoire (46) adressée ou de les extraire de ces derniers.

14. Dispositif selon l'une des revendications 4 à 13, caractérisé en ce qu'il comporte des moyens (9) permettant de générer un signal de synchronisation qui désigne le début d'un cycle.

15. Dispositif selon la revendication 14, caractérisé en ce que ledit moyen générateur du signal de synchronisation est un compteur (9) dans la première unité d'entrée/sortie (5) qui est commandé par l'horloge de bus et qui comporte une sortie pour le signal de synchronisation, et que chaque deuxième unité d'entrée/sortie (7) comporte un compteur (9) ayant des entrées pour le signal de synchronisation.

16. Dispositif selon l'une des revendications 1 à 15, caractérisé en ce qu'il comporte une table d'acheminement avec des inscriptions, lesdites inscriptions définissant chaque fois une information d'acheminement pour une partie d'adresse ou un domaine de parties d'adresse des cellules de données arrivant par une entrée (24), laquelle information indique les sorties (25) par lesquelles la cellule de données doit être sortie dans le réseau de données.

17. Dispositif selon la revendication 16, caractérisé en ce que ladite information d'acheminement consiste d'un masque à bits dans lequel un bit est attribué à chaque sortie (25), et que la condition d'un bit indique si la cellule de données doit être sortie dans le réseau de commutation par la sortie (25) attribuée audit bit.

18. Dispositif selon l'une des revendications 1 à 17, caractérisé en ce qu'il comporte une queue (68) à indicateurs de cellules pour chaque sortie, ladite queue étant composée d'emplacements de queue dont chacun permet de mémoriser un indicateur d'une cellule de mémoire (46) de la mémoire (1), que la queue (68) comporte une entrée (70) et une sortie (71), lesdits indicateurs pouvant être mis en mémoire dans la queue (68) par ladite entrée (70), et que les indicateurs sont capables d'être extraits à la sortie de la queue dans l'ordre chronologique selon lequel ils ont été introduits dans la queue.

19. Dispositif selon la revendication 18, caractérisé en ce que les queues (68) à indicateurs de cellules sont reliées à des moyens (60, 55) qui surveillent les informations d'acheminement sur le bus (3) pour déterminer si le bit attribué à une sortie (25) indique qu'une cellule de données destinée à cette sortie est en train d'être transmise dans la mémoire (1) pendant le cycle de bus en cours, et qui déduisent dans ce cas l'adresse de la cellule de mémoire dans la mémoire (1) de l'adresse de la cellule (54) et du nombre du cycle de bus et l'introduisent dans la queue (68) à indicateurs de cellules de ladite sortie.

20. Dispositif selon l'une des revendications 4 à 18, caractérisé en ce qu'il comporte des moyens d'adaptation de phase (75 resp. 29) pour chaque sortie (25) et chaque entrée, lesquels moyens effectuent une adaptation de la relation des phases des cellules de données du réseau de données et de l'horloge de bus (3).

21. Dispositif selon la revendication 20, caractérisé en ce que lesdits moyens d'adaptation de phase consistent d'un registre (29, 75) pour chaque entrée (24) et chaque sortie (25), ledit registre pouvant mémoriser au moins une cellule de données, préférablement deux et plus préférablement trois cellules de données, et que l'introduction dans le registre et l'extraction de celui-ci sont effectuées à des fréquences différentes.
